# FASCICULE DE BREVET EUROPEEN

(11) **EP 2 633 677 B1**
(45) Date de publication et mention de la délivrance du brevet: **19.08.2015**
(21) Numéro de dépôt: 11776147.8
(22) Date de dépôt: 25.10.2011
(51) Int. Cl.: H04N 21/4405, H04N 21/442, H04N 21/4623, G06F 21/34, G06F 21/36, H04L 29/06, H04N 21/418

(54) **PROCEDE DE RECEPTION D'UN CONTENU MULTIMEDIA EMBROUILLE A L'AIDE DE MOTS DE CONTROLE ET CAPTCHA**
VERFAHREN FÜR DEN EMPFANG VON MITHILFE VON STEUERWÖRTERN UND EINES SICHERHEITSCODES VERSCHLÜSSELTEN MULTIMEDIA-INHALTEN
METHOD OF RECEIVING A MULTIMEDIA CONTENT SCRAMBLED WITH THE AID OF CONTROL WORDS AND CAPTCHA

(30) Priorité: 27.10.2010 FR 1058845
(43) Date de publication de la demande: 04.09.2013
(73) Titulaire: Viaccess, 92057 Paris La Défense (FR)
(72) Inventeur: GADACHA, Haythem, F-92130 Issy-Les-Moulineaux (FR)
(74) Mandataire: Colombo, Michel
(86) Numéro de dépôt international: PCT/EP2011/068580
(87) Numéro de publication internationale: WO 2012/055829

(56) Documents cités:
- EP-A1- 2 098 971
- US-A1- 2006 294 547
- US-A1- 2010 037 319
- FRANCIS ET AL: "Countermeasures for attacks on satellite TV cards using open receivers", AUSTRALASIAN INFORMATION SECURITY WORKSHOP.: DIGITAL RIGHTSMANAGEMENT, XX, XX, 6 novembre 2004 (2004-11-06), pages 1-6, XP002333719,

## Description

L'invention concerne un procédé de réception d'un contenu multimédia embrouillé à l'aide de mots de contrôle. L'invention concerne également un processeur de sécurité, un terminal ainsi qu'un support d'enregistrement d'informations pour la mise en oeuvre de ce procédé.

L'invention s'applique en particulier au domaine du contrôle d'accès pour la fourniture de programmes multimédias payants tels que la télévision payante.

Il est connu de diffuser plusieurs contenus multimédias en même temps. Pour cela, chaque contenu multimédia est diffusé sur son propre canal. Le canal utilisé pour transmettre un contenu multimédia est également connu sous le terme de « chaine ». Un canal correspond typiquement à une chaine de télévision. Cela permet à un utilisateur de choisir simplement le contenu multimédia qu'il souhaite visualiser en changeant de canal.

Dans cette description, on désigne plus spécifiquement par « contenu multimédia » un contenu audio et/ou visuel destiné à être restitué sous une forme directement perceptible et compréhensible par un être humain. Typiquement, un contenu multimédia correspond à une succession d'images formant un film, une émission de télévision ou de la publicité. Un contenu multimédia peut également être un contenu interactif tel qu'un jeu.

Pour sécuriser et soumettre la visualisation des contenus multimédias à certaines conditions, comme la souscription d'un abonnement payant par exemple, les contenus multimédias sont diffusés sous forme embrouillée et non pas en clair. Dans cette description, le canal est dit « embrouillé » lorsque le contenu multimédia diffusé sur ce canal est embrouillé.

Plus précisément, chaque contenu multimédia est divisé en une succession de cryptopériodes. Pendant toute la durée d'une cryptopériode, les conditions d'accès au contenu multimédia embrouillé demeurent inchangées. En particulier, pendant toute la durée d'une cryptopériode, le contenu multimédia est embrouillé avec le même mot de contrôle. Généralement, le mot de contrôle varie d'une cryptopériode à l'autre.

De plus, le mot de contrôle est généralement spécifique à un contenu multimédia, ce dernier étant aléatoirement ou pseudo aléatoirement tiré. Ainsi, si à un instant donné, **N** contenus multimédias sont simultanément diffusés sur **N** canaux, il existe **N** mots de contrôle différents et indépendants employés chacun pour embrouiller l'un de ces contenus multimédias.

Ici, les termes « embrouiller » et « chiffrer » sont considérés comme des synonymes. Il en est de même pour les termes « désembrouiller » et « déchiffrer ».

Le contenu multimédia en clair correspond au contenu multimédia avant que celui-ci ne soit embrouillé. Celui-ci peut être rendu directement compréhensible par un être humain sans avoir recours à des opérations de désembrouillage et sans que sa visualisation soit soumise à certaines conditions.

Les mots de contrôle nécessaires pour désembrouiller les contenus multimédias sont transmis de manière synchronisée avec les contenus multimédias. Par exemple, les mots de contrôle nécessaires pour désembrouiller la t-ième cryptopériode sont reçus par chaque terminal pendant la (t-1)-ième cryptopériode. Pour cela, par exemple, les mots de contrôle sont multiplexés avec le contenu multimédia embrouillé.

Pour sécuriser la transmission des mots de contrôle, ceux-ci sont transmis aux terminaux sous forme de cryptogrammes contenus dans des messages ECM (Entitlement Control Message). On désigne ici par « cryptogramme » une information insuffisante à elle seule pour retrouver le mot de contrôle en clair. Ainsi, si la transmission du mot de contrôle est interceptée, la seule connaissance du cryptogramme du mot de contrôle ne permet pas de retrouver le mot de contrôle permettant de désembrouiller le contenu multimédia.

Pour retrouver le mot de contrôle en clair, c'est-à-dire le mot de contrôle permettant de désembrouiller directement le contenu multimédia, celui-ci doit être combiné avec une information secrète. Par exemple, le cryptogramme du mot de contrôle est obtenu en chiffrant le mot de contrôle en clair avec une clé cryptographique. Dans ce cas, l'information secrète est la clé cryptographique permettant de déchiffrer ce cryptogramme. Le cryptogramme du mot de contrôle peut aussi être une référence à un mot de contrôle stocké dans une table contenant une multitude de mots de contrôle possibles. Dans ce cas, l'information secrète est la table associant à chaque référence un mot de contrôle en clair.

L'information secrète doit être préservée en lieu sûr. Pour cela, il a déjà été proposé de stocker l'information secrète dans des processeurs de sécurité tels que des cartes à puce directement connectées à chacun des terminaux.

Par ailleurs, les contenus multimédias diffusés sur les différents canaux peuvent être coordonnés temporellement entre eux. Par exemple, les instants de diffusion des contenus multimédias sont réglés pour respecter les horaires de diffusion indiqués sur une grille de programmes préétablie. Chaque terminal sur un canal donné reçoit donc sensiblement en même temps le même contenu multimédia. On dit que ces contenus multimédias sont des flux « live » ou « linéarisés » car l'utilisateur ne contrôle par leur instant de transmission.

Dans ce contexte, des attaques ont été développées pour permettre à des utilisateurs de désembrouiller des contenus multimédias pour lesquels ils n'ont pas acquis licitement des droits d'accès.

L'une de ces attaques est connue sous le terme de « partage de carte » (« card sharing » en anglais). Cette attaque consiste à acquérir de façon licite un processeur de sécurité pour posséder les droits d'accès nécessaires pour désembrouiller plusieurs canaux. Ensuite, ce processeur de sécurité « licite» est introduit dans un serveur pirate qui reçoit des messages ECM d'une multitude de terminaux satellites pirates. Ainsi, lorsqu'un terminal satellite pirate souhaite désembrouiller illicitement un contenu multimédia diffusé, il reçoit ce contenu multimédia et transmet les messages ECM correspondants au serveur pirate. Le serveur pirate transmet ces messages ECM au processeur de sécurité licite. En réponse, le processeur de sécurité licite déchiffre les mots de contrôle contenus dans ces messages ECM et renvoie les mots de contrôle en clair au serveur pirate. Le serveur pirate transmet alors ces mots de contrôle en clair au terminal satellite pirate qui peut alors désembrouiller le contenu multimédia souhaité.

Dans cette attaque, le processeur de sécurité est utilisé normalement sauf qu'il traite les messages ECM d'une multitude de terminaux satellites alors que dans une utilisation licite, il ne traite que les messages ECM d'un seul terminal.

Pour détecter cette attaque, il a déjà été proposé :
- de dénombrer les changements de canaux intervenus sur une période prédéterminée de temps (voir la demande de brevet EP 1 575 293),
- de dénombrer le nombre de canaux différents désembrouillés par le processeur de sécurité sur une période prédéterminée de temps (voir la demande de brevet EP 1 447 976), et
- de dénombrer le nombre de messages ECM reçus par le processeur de sécurité sur une période prédéterminée (voir la demande de brevet WO 2008 049 882).

Ces procédés de détection mettent tous à profit le fait qu'une attaque par partage de carte se traduit par :
- un nombre de changements de canaux (également connu sous le terme de « zapping ») anormalement élevé, et/ou
- un nombre de messages ECM reçus anormalement élevé.

La détection de cette attaque permet ensuite de mettre en place des contre-mesures.

Il existe également une autre attaque connue sous l'expression de « partage de mots de contrôle » (« control word sharing » en anglais) qui exploite, elle aussi, un processeur de sécurité licite pour désembrouiller un ou plusieurs canaux. Dans cette attaque, le processeur de sécurité licite est introduit dans un serveur de mots de contrôle. Ce serveur reçoit le contenu multimédia et en extrait les messages ECM. Les messages ECM extraits sont transmis au processeur de sécurité licite qui déchiffre alors les cryptogrammes des mots de contrôle et renvoie les mots de contrôle ainsi déchiffrés au serveur. Le serveur diffuse alors à un grand nombre de terminaux satellites pirates ces mots de contrôle, ce qui leur permet de désembrouiller illicitement les contenus multimédias. Par exemple, dans cette attaque, les terminaux satellites pirates s'abonnent simplement au flux de mots de contrôle en clair généré par le serveur et correspondant au canal qu'il souhaite désembrouiller.

Cette dernière attaque diffère de l'attaque par partage de carte par le fait que les terminaux satellites pirates n'ont pas besoin de transmettre au serveur les messages ECM du canal qu'il souhaite désembrouiller. Par conséquent, le nombre de messages ECM traités par le processeur de sécurité dans cette attaque est beaucoup moins élevé que dans une attaque par partage de carte. Toutefois, si pour cette attaque, le même processeur de sécurité est utilisé pour traiter les messages ECM de différents canaux, cette attaque peut encore être détectée à l'aide des procédés de détection connus présentés ci-dessus.

De l'état de la technique est également connu de :
- Francis et Al : « Countermeasures for attack on satellite TV cards using open receivers », Australasian Information Security Workshop : Digital Rights Management, 6 novembre 2004, page 1-6, XP002333719
- US2006/294547A1,
- EP2098971A1, et
- US2010/0373319A1.

Les attaques présentées permettent à un grand nombre de pirates d'accéder au contenu multimédia d'une chaîne payante gratuitement. Ces attaques représentent en conséquence un manque à gagner pour un fournisseur de ce contenu multimédia.

Afin de palier à cet inconvénient, l'invention vise à rendre plus difficile la mise en oeuvre de ces attaques.

L'invention concerne un procédé de réception d'un contenu multimédia embrouillé à l'aide de mots de contrôle conforme à la revendication 1.

Un point commun aux attaques présentées plus haut est que le fonctionnement des serveurs pirates est totalement automatisé de manière à répondre de façon continue et rapide aux sollicitations des pirates connectés à ce serveur. Dans le procédé de l'invention, la mise en oeuvre d'un captcha permet d'empêcher cette automatisation des serveurs pirates. En effet, la réponse correcte à un captcha ne peut être trouvée facilement que par un être humain et non pas par une machine. Ainsi, la mise en oeuvre du captcha suppose une intervention humaine, par exemple, au niveau du serveur pirate ce qui rend plus difficile l'utilisation de telles attaques.

Par ailleurs, un serveur pirate ne peut pas facilement contourner cette mise en oeuvre. En effet, la réponse correcte associée au captcha est mémorisée dans le processeur ce qui empêche l'extraction de cette réponse par un serveur pirate. De plus, la comparaison entre une réponse au captcha et la réponse correcte est réalisée par le processeur de sécurité et non pas par le terminal de réception (serveur pirate). Ainsi, l'intégrité du résultat de la comparaison est garantie.

De plus, en mettant en oeuvre un captcha spécifique à un processeur pirate, on dissuade le serveur pirate de transmettre ce captcha vers des terminaux pirates puisque l'interception d'un tel captcha transmis permettrait d'identifier le processeur de sécurité et donc de remonter à l'identité d'un pirate.

Les modes de réalisation de ce procédé peuvent comporter une ou plusieurs des caractéristiques des revendications dépendantes de procédé.

Les modes de réalisation de ce procédé peuvent présenter en outre les avantages suivants:
▪ en laissant un délai de réponse avant de limiter le désembrouillage, on oblige l'utilisateur ou le serveur pirate à répondre à ce captcha. De plus, on limite la gêne causée à l'utilisateur pendant la mise en oeuvre du captcha et on limite les chances de succès d'une attaque par dictionnaire ou par force brute,
▪ en répétant la mise en oeuvre du captcha, on perturbe plus encore l'automatisation des attaques pirates,
▪ en limitant le nombre de réponses que peut recevoir le processeur à un captcha, on empêche la mise en oeuvre d'attaques par dictionnaire ou par force brute pour répondre correctement au captcha,
▪ en déclenchant la mise en oeuvre du captcha lorsqu'une utilisation potentiellement anormale est détectée, on augmente la fiabilité de la détection d'une utilisation anormale du processeur, et
▪ en incluant dans le captcha spécifique la marque contenant l'information indispensable pour répondre correctement à ce captcha, on rend difficile l'occultation de cette marque, et donc l'occultation de l'identifiant du processeur de sécurité, avant la transmission du captcha vers des utilisateurs.

L'invention concerne également un support d'enregistrement d'informations, comportant des instructions pour l'exécution du procédé présenté, lorsque ces instructions sont exécutées par un calculateur électronique.

L'invention concerne enfin un processeur de sécurité pour la mise en oeuvre du procédé présenté ci-avant, ce processeur étant conforme à la revendication 13.

L'invention concerne enfin un ensemble de processeurs de sécurité conforme à la revendication 10 ou 12.

D'autres caractéristiques et avantages de l'invention ressortiront clairement de la description qui en est faite ci-après, à titre indicatif et nullement limitatif, en référence aux dessins annexés, dans lesquels :
- la figure 1 est une illustration schématique d'un système d'émission et de réception de contenus multimédias embrouillés,
- la figure 2 est une illustration schématique d'un captcha mis en oeuvre par le système de la figure 1,
- la figure 3 est un organigramme de construction du captcha de la figure 2,
- la figure 4 est un organigramme d'un procédé de réception d'un contenu multimédia dans le système de la figure 1, et
- la figure 5 est un organigramme d'une variante du procédé de la figure 4.

Dans ces figures les mêmes références sont utilisées pour désigner les mêmes éléments.

Dans la suite de cette description, les caractéristiques et fonctions bien connues de l'homme du métier ne sont pas décrites en détail. De plus, la terminologie utilisée est celle des systèmes d'accès conditionnels à des contenus multimédias. Pour plus d'informations sur cette terminologie, le lecteur peut se reporter au document suivant :
« Functional Model of Conditional Access System », EBU Review, Technical European Broadcasting Union, Brussels, BE, n° 266, 21 décembre 1995.

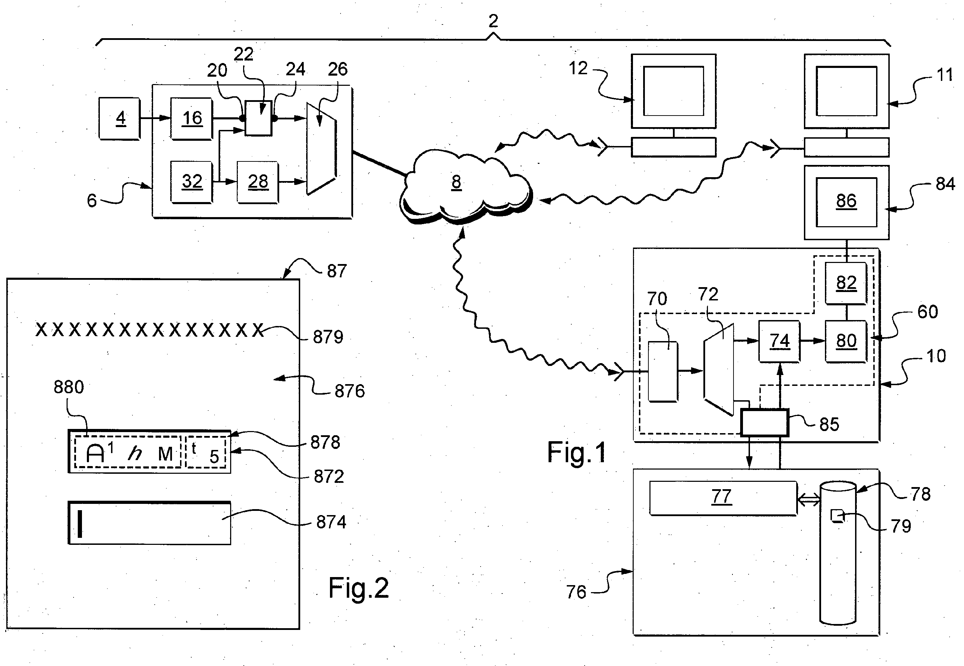

La figure 1 représente un système 2 d'émission et de réception de contenus multimédias embrouillés. Les contenus multimédias émis sont des contenus multimédias linéarisés. Par exemple, un contenu multimédia correspond à une séquence d'un programme audiovisuel tel qu'une émission de télévision ou un film.

Les contenus multimédias en clair sont générés par une ou plusieurs sources 4 et transmis à un dispositif 6 de diffusion. Le dispositif 6 diffuse les contenus multimédias simultanément vers une multitude de terminaux de réception à travers un réseau 8 de transmission d'informations. Les contenus multimédias diffusés sont synchronisés temporellement les uns avec les autres pour, par exemple, respecter une grille préétablie de programmes.

Le réseau 8 est typiquement un réseau grande distance de transmission d'informations tel que le réseau Internet ou un réseau satellitaire ou tout autre réseau de diffusion tel que celui utilisé pour la transmission de la télévision numérique terrestre (TNT).

Pour simplifier la figure 1, seuls trois terminaux 10 à 12 de réception sont représentés.

Le dispositif 6 comprend un encodeur 16 qui compresse les contenus multimédias qu'il reçoit. L'encodeur 16 traite des contenus multimédias numériques. Par exemple, cet encodeur fonctionne conformément à la norme MPEG2 (Moving Picture Expert Group - 2) ou la norme UIT-T H264.

Les contenus multimédias compressés sont dirigés vers une entrée 20 d'un embrouilleur 22. L'embrouilleur 22 embrouille chaque contenu multimédia compressé pour conditionner sa visualisation à certaines conditions telles que l'achat d'un titre d'accès par les utilisateurs des terminaux de réception. Les contenus multimédias embrouillés sont restitués sur une sortie 24 raccordée à l'entrée d'un multiplexeur 26.

L'embrouilleur 22 embrouille chaque contenu multimédia compressé à l'aide d'un mot de contrôle CW_{i,t} qui lui est fourni, ainsi qu'à un système 28 d'accès conditionnel, par un générateur 32 de clés. Le système 28 est plus connu sous l'acronyme CAS (Conditional Access System). L'indice i est un identifiant du canal sur lequel est diffusé le contenu mulimédia embrouillé et l'indice t est un numéro d'ordre identifiant la cryptopériode embrouillée avec ce mot de contrôle.

Typiquement, cet embrouillage est conforme à une norme telle que la norme DVB-CSA (Digital Video Broadcasting - Common Scrambling Algorithm), ISMA Cryp (Internet Streaming Media Alliance Cryp), SRTP (Secure Real-time Transport Protocol), AES (Advanced Encryption Standard), ... etc.

Pour chaque canal i, le système 28 génère des messages ECM_{i,t} (Entitlement Control Message) contenant au moins le cryptogramme CW*_{i,t} du mot de contrôle CW_{i,t} généré par le générateur 32 et utilisé par l'embrouilleur 22 pour embrouiller la cryptopériode t du canal i. Ces messages et les contenus multimédias embrouillés sont multiplexés par le multiplexeur 26, ces derniers étant respectivement fournis par le système 28 d'accès conditionnel et par l'embrouilleur 22, avant d'être transmis sur le réseau 8.

Le système 28 insère également dans chaque ECM :
- l'identifiant i du canal,
- les cryptogrammes CW*_{i,t} et CW*_{i,t+1} des mots de contrôle CW_{i,t} et CW_{i,t+1} permettant de désembrouiller les cryptopériodes t et t+1 immédiatement consécutives du canal i,
- des étiquettes de temps TSₜ et TSₜ₊₁, ou « timestamp » en anglais, qui repèrent les instants auxquels doivent être jouées les cryptopériodes t et t+1,
- des conditions d'accès CA destinées à être comparées à des titres d'accès acquis par l'utilisateur, et
- une signature ou une redondance cryptographique MAC permettant de vérifier l'intégrité du message ECM.

Le message ECM contenant la paire de mots de contrôle CW_{i,t}/CW_{i,t+1} est noté ECM_{i,t} dans la suite de la description où :
- l'indice i identifie le canal, et
- l'indice t est un numéro d'ordre identifiant la position temporelle de ce message ECM par rapport aux autres messages ECM différents émis pour désembrouiller le canal i.

Ici, l'indice t identifie également la cryptopériode CP_{i,t} désembrouillable à l'aide du mot de contrôle CW_{i,t} contenu dans le message ECM_{i,t}. L'indice t est unique pour chaque cryptopériode CP_{i,t}.

Les étiquettes de temps sont définies par rapport à une origine absolue indépendante du contenu multimédia diffusé et du canal sur lequel le contenu multimédia est diffusé.

Le même identifiant i est inséré dans tous les messages ECM_{i,t} contenant un cryptogramme CW*_{i,t} pour le désembrouillage des contenus multimédias diffusés sur ce canal i. A titre d'illustration, ici, l'embrouillage et le multiplexage des contenus multimédias est conforme au protocole DVB-Simulcrypt (ETSI TS 103 197). Dans ce cas, l'identifiant i peut correspondre à un couple « channel ID/stream ID » unique sur lequel sont envoyées toutes les requêtes de génération de message ECM pour ce canal.

Chaque message ECM_{i,t} comporte une paire CW*_{i,t}/CW*_{i,t+1} de cryptogrammes de mots de contrôle. Après déchiffrement, cette paire CW*_{i,t}/CW*_{i,t+1} de cryptogrammes permet d'obtenir une paire CW_{i,t}/GW_{i,t+1} de mots de contrôle.

Dans l'exemple, les terminaux 10 à 12 sont identiques. Aussi, par la suite seul le terminal 10 est décrit plus en détail.

Le terminal 10 est ici décrit dans le cas particulier où celui-ci est capable de désembrouiller simultanément un seul canal i. A cet effet, le terminal 10 comporte une seule ligne 60 de désembrouillage permettant le désembrouillage du canal i. Par exemple, la ligne 60 désembrouille le canal i pour l'afficher sur un afficheur 84.

Par exemple, l'afficheur 84 est une télévision, un ordinateur ou encore un téléphone fixe ou mobile. Ici, l'afficheur est une télévision.

La ligne 60 comprend un récepteur 70 de contenus multimédias diffusés. Ce récepteur 70 est raccordé à l'entrée d'un démultiplexeur 72 qui transmet d'un côté le contenu multimédia à un désembrouilleur 74 et d'un autre côté les messages ECM_{i,t} et EMM (Entitlement Management Message) à un processeur de sécurité 76.

Typiquement, l'interface entre le terminal 10 avec le processeur 76 est gérée par un module de contrôle d'accès 85. En particulier, le module 85 gère l'affichage sur l'afficheur 84 de données transmises par le processeur 76 au terminal 10 et la transmission au processeur 76 d'informations acquises par l'intermédiaire d'une interface homme-machine. Par exemple, l'interface homme-machine est composée de l'écran 84 et d'une télécommande.

Le désembrouilleur 74 désembrouille le contenu multimédia embrouillé à partir du mot de contrôle transmis par le processeur 76. Le contenu multimédia désembrouillé est transmis à un décodeur 80 qui le décode. Le contenu multimédia décompressé ou décodé est transmis à une carte graphique 82 qui pilote l'affichage de ce contenu multimédia sur l'afficheur 84 équipé d'un écran 86.

L'afficheur 84 affiche en clair le contenu multimédia sur l'écran 86

Le processeur 76 traite des informations confidentielles telles que des clés cryptographiques. Pour préserver la confidentialité de ces informations, il est conçu pour être le plus robuste possible vis-à-vis des tentatives d'attaques menées par des pirates informatiques. Il est donc plus robuste vis-à-vis de ces attaques que les autres composants du terminal 10. Par exemple, à cet effet, le processeur 76 est une carte à puce.

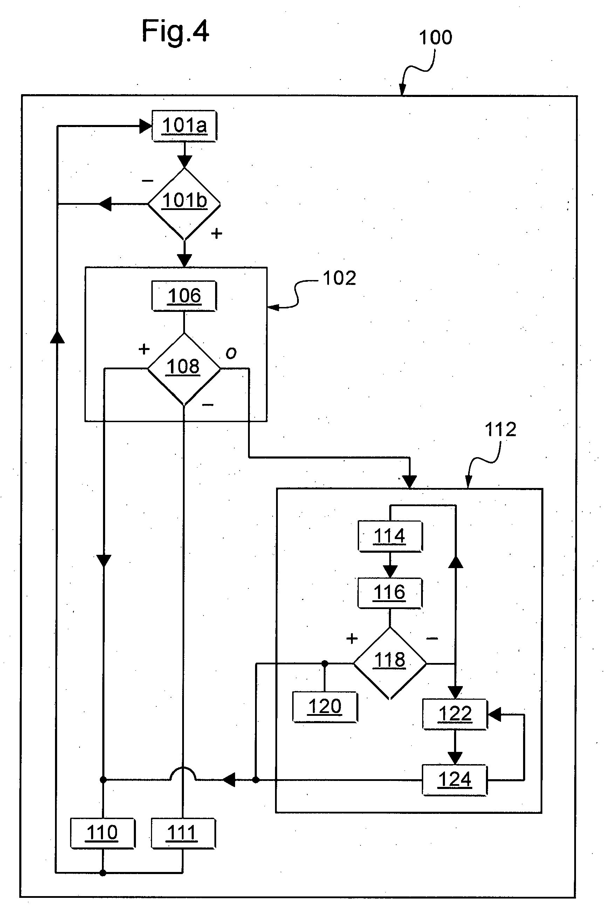

Par exemple, le processeur 76 est réalisé à l'aide d'un calculateur 77 électronique programmable apte à exécuter des instructions enregistrées sur un support d'enregistrement d'informations. A cet effet, le processeur 76 comprend une mémoire 78 contenant les instructions nécessaires pour l'exécution du procédé de la figure 4.

La mémoire 78 contient également une base de données 79 comprenant des captchas pré-enregistrés (Completely Automated Public Turing test to tell Computers and Humans Apart).

Dans cette description, on désigne par « captcha » tout test permettant de différencier un homme d'une machine. Ainsi, dans cette description les captchas ne sont pas limités au cas où une image d'une chaîne de caractères doit être recopiée dans un champ prévu à cet effet. Un captcha comprend par exemple une séquence audio, une image, une énigme, ou encore un jeu. Une énigme est par exemple une opération mathématique simple telle qu'une multiplication ou une question à choix multiples. Un jeu est par exemple un labyrinthe comportant une entrée et plusieurs sorties dont une seule est associée à l'entrée. Chaque sortie est associée à une chaîne de caractère non triviale que l'utilisateur doit saisir en tant que réponse au captcha. En revanche, on exclut ici des captchas tels que l'affichage d'un message demandant à un utilisateur de changer de canal avant de revenir sur un canal initial.

Chaque captcha de la base de données 79 est associé à une réponse correcte. Cette réponse correcte est également mémorisée dans la base 79, associée au captcha correspondant. L'enregistrement des réponses correctes dans le processeur 79 garantit que la vérification de la réponse se fait à l'intérieur du processeur 79 ce qui rend la récupération de ces réponses correctes par le biais d'un logiciel espion plus difficile.

Les captchas de la base 79 sont spécifiques au processeur 76. Par « spécifique » on désigne le fait qu'il existe une relation prédéfinie qui associe un identifiant du processeur 76 uniquement aux captchas de la base 79. Dans ces conditions, à partir d'un captcha de la base 79 et de la relation prédéfinie, il est possible d'identifier, parmi l'ensemble des processeurs de sécurité du système 2, le processeur 76.

Un captcha 87 pré-enregistré dans la base 79 va maintenant être décrit en référence à la figure 2.

Le captcha 87 comprend un challenge 872. On désigne par « challenge » d'un captcha l'ensemble des informations du captcha indispensables pour qu'un être humain soit apte à trouver systématiquement la réponse correcte à ce captcha en un unique essai.

Dans cet exemple, le challenge 872 est une image d'une chaine de caractères qu'un utilisateur doit recopier dans un champ 874 prévu à cet effet. De façon connue en soi, les caractères de la chaîne de caractères du challenge 872 comportent une police, une taille, une distorsion variant d'un caractère à l'autre. Dans ces conditions, la reconnaissance automatique de cette chaîne de caractères par un ordinateur est rendue plus difficile.

Pour simplifier la figure 2, la totalité des caractères de la chaîne de caractères n'a pas été représentée.

Le captcha 87 comprend par ailleurs un contexte 876. Par « contexte d'un captcha » on désigne l'ensemble des informations n'appartenant pas au challenge 872. Le contexte 876 comprend une phrase explicative 879 invitant un utilisateur à recopier dans le champ 874 la chaine de caractères illustrée dans le challenge 872.

Le captcha 87 comprend par ailleurs une marque 878 pour identifier le processeur 76. Ici, la marque 878 est une chaîne de caractères. Cette marque 878 est l'image de l'identifiant du processeur 76 par une fonction F. Typiquement, l'identifiant du processeur 76 est un numéro de fabrication ou un numéro de série du processeur 76 permettant d'identifier sans ambiguïté ce processeur 76 parmi l'ensemble des processeurs du système 2.

La fonction F est ici une fonction inversible. Dans ce cas, pour identifier le processeur 76 contenant la réponse correcte au captcha 87, il suffit d'appliquer la fonction inverse de la fonction F au captcha 87.

De préférence, la fonction F est une fonction de chiffrement telle qu'une fonction à clé secrète. Par exemple les fonctions DES (Data Encryption Standard) ou AES (Advanced Encryption Standard) peuvent être utilisées pour chiffrer l'identifiant du processeur 76 de manière à obtenir la marque 878.

Toujours de manière préférentielle, la fonction F prend pour paramètre d'entrée un aléa r tiré pseudo-aléatoirement par le processeur 76, en plus de l'identifiant. Ainsi, bien que l'identifiant du processeur 76 soit constant, à chaque construction d'un captcha, les marques (image de l'identifiant par la fonction F) incluses dans les captchas spécifiques sont différentes les unes des autres. Ici, l'aléa r est également inclus dans l'image de la chaîne de caractères à un emplacement prédéterminé de manière à permettre l'identification du processeur 76 à partir, seulement, du captcha spécifique et de l'inverse de la fonction F. Par exemple, l'aléa r est ici inclus dans le challenge 872 à un emplacement 880. Dans la figure 2, l'emplacement 880 est formé des quatre premiers caractères de l'image de la chaîne de caractères.

Dans cet exemple, la marque 878 est avantageusement incluse dans le challenge 872. Dans ces conditions, la marque 878, et donc l'identifiant du processeur 76, ne peut pas facilement être supprimée du captcha 87. Typiquement, si cette marque 878 est supprimée, il est impossible pour un être humain de répondre correctement au captcha en un seul essai. En effet, dans ce cas le challenge 872 est incomplet. La marque 878 est elle aussi placée à un endroit prédéterminé à l'intérieur du challenge 872. Par exemple, ici, la marque 878 est constituée des deux derniers caractères du challenge 872.

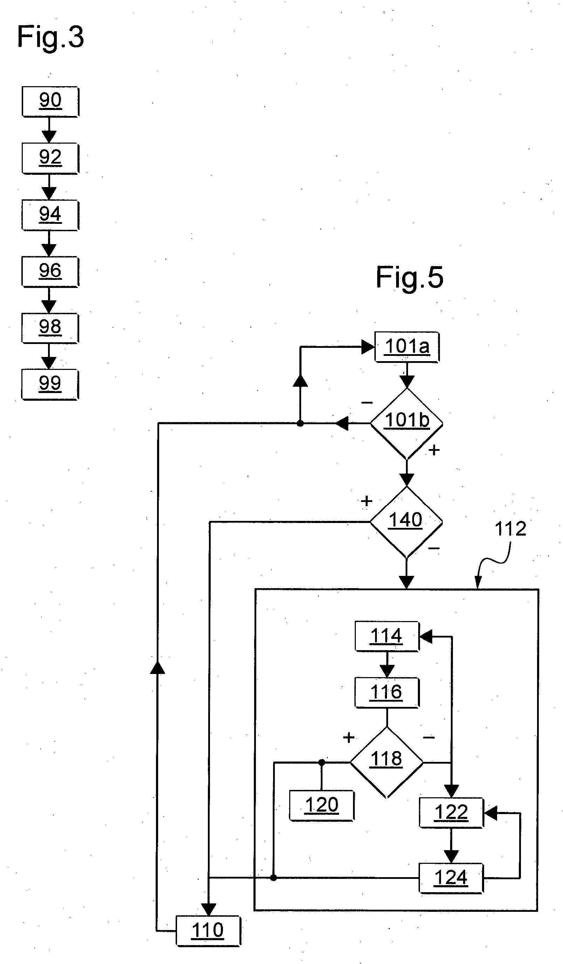

Un procédé de construction du captcha 87 va maintenant être décrit en référence à la figure 3. Dans ce cas particulier, la construction du captcha 87 est réalisée par un serveur raccordé à chaque processeur du système 2 par l'intermédiaire d'un réseau de transmission d'informations tel que le réseau 8.

Lors d'une étape 90, le serveur tire un aléa r pseudo-aléatoirement.

Lors d'une étape 92, le serveur génère un cryptogramme Id* de l'identifiant du processeur 76 en appliquant la fonction F à l'aléa r et à l'identifiant du processeur 76. Pour cela, l'identifiant du processeur 76 est mémorisé, au préalable, dans le serveur.

Lors d'une étape 94, la réponse correcte au challenge est obtenue en concaténant l'aléa r et le cryptogramme Id* dans la même chaine de caractères.

Lors d'une étape 96 le serveur construit le challenge 872 en appliquant à chaque caractère de la chaîne construite lors de l'étape 94, une transformation géométrique pour le déformer et le rendre difficilement identifiable par un ordinateur. Par « transformation géométrique » on désigne par exemple le choix d'une police et d'un facteur de distorsion pour chacun de ces caractères. La marque 878 est l'image du cryptogramme Id*par la transformation géométrique.

L'application de telles transformations pour générer le challenge 872 sont par exemple décrites dans la demande de brevet US2008/0072293.

Lors d'une étape 98, le captcha et la réponse correcte associée à ce captcha sont mémorisés par le serveur.

Ensuite, lors d'une étape 99, le captcha 87 et la réponse correcte sont enregistrés dans la base 79 du processeur 76 lors de la fabrication du processeur 76 en usine ou transmis lors de l'utilisation du processeur 76 par le biais d'un message EMM. En réponse au message EMM, le processeur enregistre le captcha 87 dans la base 79.

Un procédé de réception d'un contenu multimédia à l'aide du système 2 va maintenant être décrit en référence à la figure 4.

Lors d'une phase 100 d'utilisation, un utilisateur visionne un contenu multimédia en clair sur l'écran 86 de l'afficheur 84. Par exemple, l'utilisateur regarde un film.

A cet effet, lors d'une étape 101 a, le terminal 10 reçoit un contenu multimédia multiplexé par l'intermédiaire du récepteur 70. Ce contenu est démultiplexé par le démultiplexeur 72 et les messages ECM sont transmis au processeur 76 par l'intermédiaire du module 85. Par exemple, le module 85 ne transmet que les messages ECM_{i,t} relatifs au canal i sur lequel est diffusé le film visionné par l'utilisateur. Ces messages ECM_{i,t} contiennent un cryptogramme CW*_{i,t} d'un mot de contrôle CW_{i,t} permettant de désembrouiller le contenu multimédia diffusé sur le canal i ainsi que des droits d'accès pour autoriser ou non le déchiffrement du cryptogramme CW*_{i,t}.

Lors d'une étape 101b, le processeur 76 vérifie si l'utilisateur possède des titres d'accès correspondant aux droits d'accès contenu dans le message ECM_{i,t} reçu.

Dans la négative, le processeur 76 ne déchiffre pas le cryptogramme CW*_{i,t} et ne transmet pas le mot de contrôle CW_{i,t} au désembrouilleur 74. Le procédé retourne alors à l'étape 101a. Le désembrouillage du contenu multimédia s'interrompt.

Si l'utlilisateur possède les titres d'accès correspondant aux droits d'accès reçus, alors le processeur 76 procède à une étape 102.

Lors de l'étape 102, le processeur 76 détecte une utilisation potentiellement anormale.

Dans cette description, on considère que l'utilisation du processeur 76 est potentiellement anormale lorsque le processeur 76 semble être utilisé dans le cadre d'une des attaques présentées ci-avant. Ici, on considère plus particulièrement que l'utilisation du processeur 76 est potentiellement anormale si le processeur 76 semble être utilisé dans le cadre d'une attaque par partage de carte ou d'une attaque par partage de mots de contrôle.

Dans l'exemple, lors d'une opération 106, le processeur 76 calcule un nombre N_{ECM} de messages ECM reçus par le processeur 76 par unité de temps. A cet effet, le procédé de détection décrit dans la demande de brevet WO2008049882 est par exemple mis en oeuvre.

Lors d'une opération 108, le processeur 76 détermine si l'utilisation du processeur est normale, potentiellement anormale ou anormale en comparant le nombre N_{ECM} à des seuils S_{1ECM} et S_{2ECM}. Si le nombre N_{ECM} est inférieur au seuil S_{1ECM} alors l'utilisation est normale. Si le nombre N_{ECM} est supérieur au seuil S_{2ECM}, alors l'utilisation est anormale. Si le nombre N_{ECM} est compris entre les seuils S_{1ECM} et S_{2ECM}, alors l'utilisation est potentiellement anormale. Une utilisation potentiellement anormale correspond à une zone d'incertitude où les mesures réalisées par le processeur 76 ne permettent pas de trancher avec certitude entre une utilisation normale et une utilisation anormale. Cette zone d'incertitude doit être réduite autant que possible pour éviter de sanctionner une utilisation normale ou éviter de ne pas sanctionner une utilisation anormale.

Si le processeur 76 détecte que son utilisation est normale alors, lors d'une étape 110, le processeur 76 déchiffre le cryptogramme CW*_{i,t}. Ensuite, le processeur 76 transmet le mot de contrôle CW_{i,t} au terminal 10 pour désembrouiller le flux multimédia et le l'utilisateur poursuit le visionnage du film en clair.

Si le processeur 76 détecte que son utilisation est anormale, lors d'une étape 111, le processeur 76 ne déchiffre pas le cryptogramme CW*_{i,t}. Le terminal 10 est donc incapable de désembrouiller le contenu multimédia et l'utilisateur ne visionne plus le film en clair.

Si le processeur 76 détecte que son utilisation est potentiellement anormale, alors il procède à une étape 112 lors de laquelle un test supplémentaire est réalisé pour réduire la zone d'incertitude.

Lors d'une opération 114, le processeur sélectionne un captcha parmi les captchas pré-enregistrés dans la base de données 79. Par exemple, le processeur 76 sélectionne pseudo-aléatoirement un captcha dans la base de données 79. Pour la suite de la description, on suppose que le processeur 76 a sélectionné le captcha 87.

Lors de cette opération 114, le processeur 76 transmet le captcha 87 au module 85 qui commande le terminal 10 pour afficher le captcha 87 sur l'écran 86. Simultanément, le processeur 76 déclenche un compteur qui décompte un intervalle de temps prédéterminé DR. Par exemple, un compteur CD_{DR} est initialisé lors de la sélection du captcha par le processeur 76 puis déclenché. Typiquement, l'intervalle DR est supérieur à 2 minutes et, de préférence, supérieur à 5 minutes. Ici, l'intervalle DR est de 15 minutes.

Par ailleurs, lors de cette opération 114, un compteur CR_{MR} pour dénombrer les réponses incorrectes reçues par le processeur 76 est également initialisé.

Un utilisateur est alors invité à répondre au captcha affiché: Ici, l'utilisateur est invité à recopier le challenge 872 dans le champ 874. Dans l'exemple, l'utilisateur possède l'intervalle de temps prédéterminé DR pour fournir une réponse correcte au captcha sélectionné.

Lors d'une opération 116, l'utilisateur répond au captcha par l'intermédiaire d'une interface homme-machine (par exemple un clavier de la télécommande) connectée au terminal 10. La réponse est alors transmise par le terminal 10 et le module 85 au processeur 76.

Avantageusement, si lors de l'opération 116 l'utilisateur ne comprend pas le captcha affiché, celui-ci a la possibilité de demander la sélection d'un nouveau captcha par le processeur 76. Dans ce cas, le compteur CD_{DR} n'est pas réinitialisé.

Lors d'une opération 118, le processeur 76 reçoit la réponse et la compare avec la réponse correcte pour ce captcha contenue dans la base de données 79. A chaque réponse incorrecte reçue par le processeur 76, le compteur CR_{MR} est incrémenté d'un pas prédéterminé.

Si le nombre de réponses incorrectes reçues par le processeur 76 pour un captcha sélectionné est supérieur à un seuil MRₘₐₓ prédéfini ou si l'utilisateur demande à changer de captcha, le processeur 76 retourne à l'étape 114 pour sélectionner un nouveau captcha parmi les captchas pré-enregistrés dans la base 79. Toutefois, dans ce cas le processeur 76 réinitialise le compteur CR_{MR} mais le compteur CD_{DR} n'est pas réinitialisé. Typiquement, le seuil MRₘₐₓ est supérieur ou égal à un et inférieur ou égal à cing Ici, le seuil MRₘₐₓ est supérieur à deux. Il est égal à trois. Chaque nouveau captcha est de préférence sélectionné par le processeur 76 de manière à ce que la réponse correcte à ce nouveau captcha sélectionné soit distincte de la réponse correcte du précédent captcha sélectionné. Ainsi, une attaqué par dictionnaire, c'est-à-dire une attaque consistant à essayer des combinaisons de réponses enregistrées issues de captcha soumis dans le passé, ne peut pas être mise en oeuvre par un serveur pirate pour répondre correctement à un captcha sélectionné. Une attaque par dictionnaire diffère d'une attaque par force brute dans laquelle une à une, toutes les réponses possibles sont essayées.

Lors de l'opération 118, si le processeur 76 reçoit une réponse correcte au captcha sélectionné avant l'expiration de l'intervalle de temps DR, alors le processeur 76 conclut que l'utilisation est normale et il procède à l'étape 110.

Toujours lors de l'opération 118, si l'intervalle de temps DR expire et qu'aucune réponse correcte à un captcha sélectionné n'a été reçue par le processeur 76, le processeur 76 conclut qu'il s'agit d'une utilisation anormale.

En conséquence, lors d'une opération 122, le processeur 76 sélectionne pseudo-aléatoirement un nouveau captcha dans la base de données 79 et commande le module 85 pour afficher ce captcha sur l'écran 86.

Ensuite, lors d'une opération 124, le processeur 76 déclenche la mise en oeuvre d'une contre-mesure. Par exemple, ici, le processeur 76 limite le déchiffrement des cryptogrammes CW*. Par « limiter le déchiffrement des cryptogrammes » on désigne ici la suspension du déchiffrement des cryptogrammes CW*_{i,t} du canal i actuellement visualisé uniquement ou des cryptogrammes CW* de tous les canaux pendant une durée prédéterminée.

De plus, tant que le processeur 76 ne reçoit pas de réponse correcte au captcha affiché lors de l'opération 122, le procédé reste à l'opération 124. Dans ces conditions, le terminal 10 ne peut plus désembrouiller le contenu multimédia et l'utilisateur ne peut pas poursuivre le visionnage du film en clair.

Si le processeur reçoit la réponse correcte au captcha affiché lors de l'opération 122, alors il procède à l'étape 110. Le désembrouillage des contenus multimédias est donc débloqué.

Par exemple, la mise en oeuvre de ce captcha lors de l'étape 124 est identique à ce qui a été décrit en référence aux étapes 114, 116 et 118. En particulier, un intervalle de temps DR limité pour répondre au captcha et un nombre maximum de fausses réponses sont mis en oeuvre.

Le procédé de la figure 4 permet de lutter efficacement contre la mise en oeuvre d'attaques pirates par partage de carte ou partage de mots de contrôle. En effet, supposons que le processeur 76 est utilisé par un serveur pirate. Dans ce cas, un ensemble d'utilisateurs pirates visionnent illicitement un contenu multimédia payant par le biais de machines, par exemple, connectées au serveur pirate par l'intermédiaire du réseau 8.

Dans ce contexte, lorsque le processeur 76 détecte (étape 102) une utilisation potentiellement anormale, le processeur 76 sélectionne et commande (étape 114) l'affichage d'un captcha par le serveur pirate (ici le serveur pirate occupe la fonction du terminal 10) sur un afficheur.

Si le serveur pirate est peu évolué (cas trivial), celui-ci n'est pas à même de traiter la commande générée par le processeur 76 et le serveur n'affiche pas le captcha sur un afficheur. Dès lors, l'intervalle de temps DR expire sans qu'aucune réponse correcte ne soit reçue par le processeur 76. Par conséquent, le processeur 76 limite le déchiffrement des cryptogrammes CW* (étape 122). Dans ces conditions, le serveur pirate ne peut plus transmettre à des pirates les mots de contrôles déchiffrés. Les pirates ne peuvent plus visionner le contenu multimédia en clair.

Si le serveur pirate est évolué (cas non trivial), lorsque le serveur pirate reçoit la commande du processeur 76 pour afficher un captcha, le serveur pirate tente de déjouer la mise en oeuvre de ce captcha. Deux stratégies sont envisageables.

Dans une première stratégie, le serveur affiche le captcha sélectionné par le processeur 76 sur un écran connecté localement au serveur pirate. Dans ces conditions, un ou plusieurs opérateurs pirates doivent être présent en permanence devant l'écran de cette machine pour répondre correctement aux captchas s'affichant afin d'empêcher la limitation du déchiffrement des cryptogrammes CW* par le processeur 76. Une telle stratégie présente l'inconvénient d'empêcher l'automatisation du serveur pirate.

Dans une seconde stratégie, le serveur redirige le captcha sélectionné par le processeur 76 vers un terminal d'un pirate connecté au réseau 8 de manière à ce que l'utilisateur illicite puisse fournir une réponse correcte pour ce captcha. Typiquement, l'utilisateur illicite entré la réponse correcte sur son terminal et renvoie cette réponse au processeur 76 par le biais du serveur pirate. Dans ces conditions, le processeur 76 ne limite pas le désembrouillage des cryptogrammes CW* et l'ensemble des pirates du réseau peut continuer à visionner le contenu multimédia en clair.

Du point de vue des pirates cette stratégie présente l'avantage de pouvoir automatiser le fonctionnement du serveur pirate. Toutefois, l'opérateur de télévision payante peut désormais identifier le processeur 76. En effet, les captchas étant sélectionnés dans la base de donnée 79, ceux-ci sont spécifiques au processeur 76 et permettent ainsi d'identifier le processeur 76.

Plus précisément, il suffit d'intercepter un captcha transmis sur le réseau 8 en provenance du serveur pirate pour identifier le processeur 76. Cela peut facilement être fait en se connectant directement au serveur pirate pour visionner un contenu multimédia en clair de manière illicite. Ensuite, l'opérateur peut identifier le processeur 76 à partir de la marque 878 et de l'aléa 880 compris dans le captcha intercepté.

Par ailleurs, une fois le processeur 76 identifié avec certitude, l'opérateur peut sanctionner l'utilisateur du processeur 76. Par exemple, l'opérateur cesse d'envoyer au processeur 76 les clés secrètes pour déchiffrer les cryptogrammes CW*. Dans ces conditions, le serveur pirate ne peut plus être utilisé pour désembrouiller le flux multimédia.

La figure 5 illustre un procédé de réception d'un contenu multimédia embrouillé à l'aide de mots de contrôle. Ce procédé est identique au procédé de la figure 2 à l'exception du fait que l'étape 102 est remplacée par une étape 140 et l'étape 111 est omise.

Lors de l'étape 140, le processeur dénombre le nombre de messages ECM reçus. Si ce nombre dépasse un seuil Smax, alors il procède automatiquement à l'étape 112. Dans le cas contraire, il procède à l'étape 110. Ainsi, l'étape 112 est systématiquement régulièrement mise en oeuvre. A chaque nouvelle mise en oeuvre de l'étape 112, un nouveau captcha est sélectionné.

De nombreux modes de réalisation sont possibles.

Par exemple, les captchas pré-enregistrés dans la base de données 79 peuvent être mis à jour périodiquement par l'opérateur de télévision payante par le biais de messages ECM ou EMM.

Par captcha spécifique on ne désigne pas uniquement le cas où seul un processeur contient la réponse correcte à un captcha. Deux captchas, spécifiques à deux processeurs différents, peuvent avoir la même réponse. Dans ce cas, par exemple, l'identifiant du processeur est codé par les transformations appliquées à chacun des caractères et non pas par les caractères choisis.

La base de données 79 ne contient pas nécessairement des captchas préenregistrés. Par exemple, la base de données 79 contient des adresses pour permettre au processeur 76 de télécharger des captchas depuis un serveur de l'opérateur de télévision payante. Dans ce cas, les réponses correctes respectives aux captchas associés à ces adresses sont préenregistrées dans la mémoire 78. Typiquement, les adresses sont des URLs (Uniform Ressource Locator). Par exemple, la mémoire 78 contient une table associant chaque URL avec une réponse préenregistrée respective. Lorsque le processeur souhaite déclencher l'affichage d'un captcha, il transmet l'URL au module 85 qui se charge de le télécharger et de mettre en oeuvre le captcha téléchargé à cette adresse URL. Dans ce mode de réalisation chaque terminal est connecté à un serveur de captcha de l'opérateur par Internet.

La marque pour identifier le processeur 76 n'est pas nécessairement incluse dans le challenge du captcha. Elle peut être incluse dans le contexte de ce captcha. Dans ce cas, de préférence l'emplacement de la marque dans le contexte varie d'un captcha à un autre pour rendre plus difficile l'automatisation de son occultation.

La marque n'est pas nécessairement une chaîne de caractères. Il peut s'agir d'un motif, d'une chaîne de caractères ou encore d'un son.

La fonction F peut être la fonction identité. Dans ce cas, l'identifiant du processeur 76 est inclus dans le captcha.

La fonction F peut être une fonction non inversible. Par exemple, la fonction F est une fonction de hachage de type SHA1 (Secure Hash Algorithm 1). Dans ce cas, pour identifier le processeur contenant la réponse correcte à un captcha, il est nécessaire de comparer le résultat de la fonction F prenant pour paramètre l'identifiant du processeur 76 avec l'ensemble des résultats de la fonction F prenant pour paramètre les identifiants de chacun des processeurs du système 2. En pratique, l'opérateur de télévision payante connaît les identifiants de chacun des processeurs du système 2. Aussi, dans ce cas cet opérateur est apte à identifier le processeur 76 à partir d'un captcha.

Dans un mode de réalisation prévu par l'invention, les captchas sont spécifiques au processeur 76 mais ne comporte pas de marque ou autre élément construit à partir de la fonction F. Par exemple, la relation prédéfinie est une base de données de l'opérateur associant à chaque captcha spécifique l'identifiant du processeur de sécurité contant la réponse correcte à ce captcha. Ainsi, à partir d'un captcha intercepté et de cette base de données, l'opérateur peut retrouver l'identifiant de processeur utilisé.

Les captchas utilisés ne sont pas nécessairement spécifiques à un processeur.

Dans le procédé de la figure 4, le captcha n'est pas nécessairement sélectionné par le processeur 76. Par exemple, le captcha est sélectionné par l'opérateur de télévision payante par l'intermédiaire d'un message EMM ou ECM.

L'intervalle de temps DR n'est pas nécessairement une durée prédéfinie. Il peut par exemple s'agir d'un nombre prédéfini de messages ECM reçus par le processeur 76 depuis la sélection du captcha. L'intervalle DR est de préférence tiré de façon aléatoire ou pseudo-aléatoire dans une plage prédéterminée de valeurs.

Lorsque le processeur 76 commande l'affichage d'un captcha sélectionné, celui-ci n'est pas nécessairement affiché sur l'écran 86. En variante, le terminal est équipé de son propre écran de contrôle et le captcha est directement affiché sur l'écran de contrôle du terminal de manière à ne pas gêner l'utilisateur lors de la mise en oeuvre de l'étape 112.

Le captcha n'est pas nécessairement affiché. Par exemple, dans le cas où le captcha comprend uniquement une séquence audio, le captcha peut être joué par l'intermédiaire d'un haut parleur.

L'opération 106 de détection d'une utilisation potentiellement anormale du processeur 76 peut être réalisée différemment. Par exemple, le processeur 76 peut dénombrer des changements de canaux pendant une période d'observation prédéfinie. Ce dénombrement des changements de canaux est réalisé à partir de l'identifiant i de canal contenu dans les messages ECM reçus par le processeur 76. Dans un autre mode de réalisation, l'identifiant i du canal regardé est obtenu de façon différente.

Si la détection d'une utilisation potentiellement anormale n'utilise pas l'identifiant i de canal contenu dans le message ECM, alors celui-ci peut être omis dans des messages ECM.

L'étape 140 de déclenchement systématique et à intervalle régulier de l'affichage d'un captcha peut aussi être réalisée en dénombrant le nombre de messages EMM reçus ou de cryptogrammes déchiffrés. Dans une autre variante, lors de l'étape 140, le processeur mesure une durée DP écoulée depuis l'exécution d'une précédente étape 112 et, uniquement si cette durée DP franchit un seuil prédéterminé, le processeur 76 exécute l'étape 112. Dans le cas contraire, l'étape 112 n'est pas exécutée et le processeur 76 exécute l'étape 110.

Dans les procédés des figures 4 et 5, le processeur 76 maintient le déchiffrement des cryptogrammes CW* lors de la mise en oeuvre du captcha et le désembrouillage est limité uniquement si le processeur 76 ne reçoit aucune réponse au captcha correspondant à une réponse correcte avant expiration de l'intervalle de temps DR. Dans une variante, le déchiffrement des cryptogrammes CW* est limité dès la sélection du captcha par le processeur 76. Le déchiffrement des cryptogrammes CW* est ensuite rétabli uniquement lorsque le processeur 76 reçoit une réponse correcte au captcha affiché.

Lors de l'opération 122, la limitation du déchiffrement des cryptogrammes CW* peut aussi être obtenue en modifiant les titres d'accès enregistrés dans la mémoire 78.

Il est possible de prévoir une suspension momentanée de l'exécution de l'étape 102 ou 140. Lors que ces étapes sont suspendues, la mise en oeuvre de captcha est désactivée. Cela peut être utile lorsque l'utilisateur est un enfant.

Les paramètres des procédés des figures 4 et 5 et de leurs variantes (intervalle DR, durée DP, seuils MRₘₐₓ, Smax, ...) peuvent être préenregistrés de manière définitive dans la mémoire 78 lors de la fabrication du processeur 76. En variante, ils peuvent être changés dynamiquement par l'opérateur, par exemple, par l'intermédiaire de messages EMM.

Les étiquettes de temps peuvent être utilisées pour mesurer l'intervalle DR par exemple. Dans une autre variante, les étiquettes de temps sont omises des messages ECM.

Les captchas de la base 79 ne sont pas nécessairement construits par un serveur de l'opérateur de télévision payante. Ceux-ci peuvent être directement construits par le processeur 76.

En variante, les marques 878 introduites dans les captchas codent uniquement une partie respective de l'identifiant du processeur. Ainsi, il faut intercepter plusieurs captchas pour obtenir l'identifiant complet du processeur 76.

L'utilisation de captchas comportant une marque spécifique à un processeur peut être mis en oeuvre dans d'autres domaines techniques et indépendamment d'un procédé de réception d'un contenu multimédia embrouillé.

## Revendications

1. Procédé de réception d'un contenu multimédia embrouillé à l'aide de mots de contrôle, ce procédé comprenant:
- la réception (101 a) par un processeur de sécurité de messages ECM (Entitlement Control Message) contenant au moins un cryptogramme CW* d'un mot de contrôle CW permettant de désembrouiller un contenu multimédia,
- le déchiffrement (110) par le processeur de sécurité de ce cryptogramme CW*, et
- le désembrouillage (110) du contenu multimédia embrouillé à partir du mot de contrôle CW déchiffré,
**caractérisé en ce que** le procédé comporte également les étapes suivantes:
- au moins une mise en oeuvre (114) d'un captcha (Completely Automated Public Turing test to tell Computers and Humans Apart) spécifique au processeur de sécurité, depuis un terminal de réception, dont la réponse correcte est contenue dans une mémoire du processeur de sécurité et varie d'une mise en oeuvre à l'autre, cette mise en oeuvre comportant la transmission du captcha vers ce terminal de réception de manière à déclencher son affichage sur un écran,
ce captcha spécifique étant associé par l'intermédiaire d'une relation prédéfinie à un identifiant de ce processeur de sécurité contenant la réponse correcte à ce captcha de manière à permettre l'identification de ce processeur de sécurité à partir de ce captcha parmi un ensemble de processeurs de sécurité,
- le processeur de sécurité acquière (116) au moins une réponse à ce captcha et compare (118) cette réponse avec la réponse correcte contenue dans sa mémoire, et
- le processeur de sécurité limite (122) le désembrouillage des cryptogrammes CW* si aucune réponse à ce captcha ne correspond à la réponse correcte contenue dans la mémoire, et
- l'interception du captcha transmis et l'identification du processeur de sécurité à partir du captcha intercepté.

2. Procédé selon la revendication 1, dans lequel:
- le désembrouillage des cryptogrammes CW* est maintenu lors de la mise en oeuvre du captcha (114), et
- si aucune réponse au captcha correspondant à la réponse correcte contenue dans la mémoire n'est reçue dans un intervalle de temps prédéterminé DR, le processeur limite (122) le désembrouillage des cryptogrammes CW*.

3. Procédé selon l'une quelconque des revendications précédentes, dans lequel le procédé comporte la mise en oeuvre automatique par le processeur d'un nouveau captcha à chaque fois que la valeur d'un compteur CR dénombrant le nombre de messages ECM ou EMM reçus par le processeur atteint un seuil prédéfini ou à chaque fois qu'une durée DP prédéfinie s'est écoulée depuis la mise en oeuvre d'un précédent captcha.

4. Procédé selon l'une quelconque des revendications 2 à 3, dans lequel si l'intervalle de temps DR n'a pas expiré depuis la mise en oeuvre d'un précédent captcha et que le nombre de réponses incorrectes à ce précédent captcha, reçues par le processeur, est supérieur à un seuil MRₘₐₓ prédéfini, le procédé comporte la mise en oeuvre d'un nouveau captcha dont la réponse correcte, également contenue dans la mémoire du processeur, est distincte de la réponse correcte du précédent captcha, la réponse correcte devant être reçue par le processeur avant l'expiration de l'intervalle de temps DR, l'intervalle de temps DR n'étant pas réinitialisé lors de la mise en oeuvre du nouveau captcha.

5. Procédé selon l'une quelconque des revendications précédentes, dans lequel le procédé comporte:
- la détection (102) d'une utilisation potentiellement anormale du processeur de sécurité en fonction de messages ECM ou EMM reçus par ce processeur de sécurité, et
- le déclenchement (112) de la mise en oeuvre du captcha en réponse à cette détection d'une utilisation potentiellement anormale.

6. Procédé selon la revendication 5, dans lequel la détection de l'utilisation potentiellement anormale du processeur de sécurité est réalisée à partir d'un dénombrement des changements de canaux pendant une période d'observation ou d'un dénombrement des messages ECM reçus pendant une période d'observation.

7. Procédé selon l'une quelconque des revendications précédentes, dans lequel le procédé comprend l'inclusion d'une marque dans le captcha spécifique, cette marque étant associée par l'intermédiaire de la relation prédéfinie à l'identifiant du processeur de sécurité et cette marque comportant une information indispensable qui, si elle est supprimée, rend impossible la découverte de la réponse correcte à ce captcha en un unique essai par un être humain.

8. Procédé selon l'une quelconque des revendications précédentes, dans lequel la relation prédéfinie est une base de données associant à chaque captcha spécifique l'identifiant du processeur de sécurité contenant la réponse correcte à ce captcha ou une fonction prédéfinie permettant de construire le captcha en fonction de l'identifiant du processeur de sécurité.

9. Support d'enregistrement d'informations, **caractérisé en ce qu'**il comporte des instructions pour l'exécution d'un procédé conforme à l'une quelconque des revendications précédentes, lorsque ces instructions sont exécutées par un calculateur électronique.

10. Ensemble de plusieurs processeurs électroniques (76) de sécurité pour la mise en oeuvre d'un procédé conforme à l'une quelconque des revendications 1 à 8, chaque processeur étant programmé pour :
- recevoir des messages ECM (Entitlement Control Message) contenant au moins un cryptogramme CW* d'un mot de contrôle CW permettant de désembrouiller un contenu multimédia,
- déchiffrer ce cryptogramme CW*, et
- transmettre le mot de contrôle déchiffré à un désembrouilleur pour désembrouiller le contenu multimédia embrouillé à partir de ce mot de contrôle CW déchiffré,
**caractérisé en ce que**
- chaque processeur comporte une mémoire (78) contenant :
• une base de données (79) contenant des adresses pour permettre à ce processeur (76) de sécurité de télécharger des captchas (Completely Automated Public Turing test to tell Computers and Humans Apart) spécifiques depuis un serveur d'un opérateur de télévision payante, et
• des réponses correctes pré-enregistrées respectives aux captchas spécifique associées à ces adresses,
chaque captcha spécifique étant associé par l'intermédiaire d'une relation prédéfinie à un identifiant de ce processeur de sécurité contenant la réponse correcte à ce captcha de manière à permettre l'identification de ce processeur de sécurité à partir de ce captcha parmi ledit ensemble de plusieurs processeurs de sécurité, et
- chaque processeur est également programmé pour :
• transmettre une adresse contenue dans sa base de données à un terminal de réception qui se charge de télécharger et de mettre en oeuvre le captcha téléchargé à cette adresse, et
• en réponse à au moins une mise en oeuvre de ce captcha (Completely Automated Public Turing test to tell Computers and Humans Apart), depuis le terminal de réception, :
- acquérir au moins une réponse à ce captcha et comparer cette réponse avec la réponse correcte pré-enregistrée contenue dans sa mémoire, et
- limiter (122) le désembrouillage des cryptogrammes CW* si aucune réponse à ce captcha ne correspond à la réponse correcte pré-enregistrée contenue dans sa mémoire.

11. Ensemble selon la revendication 10, dans lequel les adresses sont des URLs (Uniform Ressource Locator).

12. Ensemble de plusieurs processeurs électroniques (76) de sécurité pour la mise en oeuvre d'un procédé conforme à l'une quelconque des revendications 1 à 8, chaque processeur étant programmé pour :
- recevoir des messages ECM (Entitlement Control Message) contenant au moins un cryptogramme CW* d'un mot de contrôle CW permettant de désembrouiller un contenu multimédia,
- déchiffrer ce cryptogramme CW*, et
- transmettre le mot de contrôle déchiffré à un désembrouilleur pour désembrouiller le contenu multimédia embrouillé à partir de ce mot de contrôle CW déchiffré,
**caractérisé en ce que**
- chaque processeur comporte une mémoire (78) contenant une base (79) de données comprenant:
• des captcha (Completely Automated Public Turing test to tell Computers and Humans Apart) pré-enregistrés spécifiques au processeur de sécurité, et
• les réponses correctes pré-enregistrées aux captcha, chaque réponse correcte étant associée au captcha correspondant,
chaque captcha spécifique étant associé par l'intermédiaire d'une relation prédéfinie à un identifiant de ce processeur de sécurité contenant la réponse correcte à ce captcha de manière à permettre l'identification de ce processeur de sécurité à partir de ce captcha parmi ledit ensemble de plusieurs processeurs de sécurité, et
- chaque processeur est également programmé pour :
• transmettre l'un des captcha pré-enregistrés vers un terminal de réception de manière à déclencher son affichage sur un écran,
• en réponse à la mise en oeuvre de ce captcha (Completely Automated Public Turing test to tell Computers and Humans Apart), depuis ce terminal de réception, :
- acquérir au moins une réponse à ce captcha et comparer cette réponse avec la réponse correcte pré-enregistrée contenue dans la base de données, et
- limiter (122) le désembrouillage des cryptogrammes CW* si aucune réponse à ce captcha ne correspond à la réponse correcte pré-enregistrée contenue dans la base de données.

13. Processeur électronique (76) de sécurité pour la mise en oeuvre d'un procédé conforme à l'une quelconque des revendications 1 à 8, ce processeur étant programmé pour :
- recevoir des messages ECM (Entitlement Control Message) contenant au moins un cryptogramme CW* d'un mot de contrôle CW permettant de désembrouiller un contenu multimédia,
- déchiffrer ce cryptogramme CW*, et
- transmettre le mot de contrôle déchiffré à un désembrouilleur pour désembrouiller le contenu multimédia embrouillé à partir de ce mot de contrôle CW déchiffré,
**caractérisé en ce que**
- le processeur comporte une mémoire (78) contenant au moins une réponse correcte à un captcha (Completely Automated Public Turing test to tell Computers and Humans Apart) spécifique au processeur de sécurité,
le captcha spécifique étant associé par l'intermédiaire d'une relation prédéfinie à un identifiant de ce processeur de sécurité contenant la réponse correcte à ce captcha de manière à permettre l'identification de ce processeur de sécurité à partir de ce captcha parmi un ensemble de processeurs de sécurité, et
- ce processeur est également programmé pour, en réponse à au moins une mise en oeuvre de ce captcha (Completely Automated Public Turing test to tell Computers and Humans Apart), depuis un terminal de réception, :
• acquérir au moins une réponse à ce captcha et comparer cette réponse avec la réponse correcte contenue dans sa mémoire, et
• limiter (122) le désembrouillage des cryptogrammes CW* si aucune réponse à ce captcha ne correspond à la réponse correcte contenue dans la mémoire,
dans lequel le processeur est également programmé pour construire ce captcha spécifique à partir de son identifiant puis le transmettre au terminal de réception de manière à déclencher son affichage sur un écran.

## Patentansprüche

1. Verfahren für den Empfang von mithilfe von Steuerwörtern verschlüsselten Multimedia-Inhalten, wobei das Verfahren Folgendes umfasst:
- das Empfangen (101a) durch einen Sicherheitsprozessor von ECM-Nachrichten (Entitlement Control Messages), die mindestens ein Kryptogramm CW* eines Steuerwortes CW enthalten, das es ermöglicht, einen Multimedia-Inhalt zu entschlüsseln,
- das Dechiffrieren (110) des Kryptogramms CW* durch den Sicherheitsprozessor und
- das Entschlüsseln (110) des verschlüsselten Multimedia-Inhalts ausgehend von dem entschlüsselten Steuerwort CW,
**dadurch gekennzeichnet, dass** das Verfahren auch die folgenden Schritte umfasst:
- mindestens ein Implementieren (114) eines Captchas (Completely Automated Public Turing test to tell Computers and Humans Apart), der für den Sicherheitsprozessor spezifisch ist, von einem empfangenden Endgerät, dessen richtige Antwort in einem Speicher des Sicherheitsprozessors enthalten ist und von einem Implementieren zum anderen variiert, wobei das Implementieren das Übertragen des Captchas zu dem empfangenden Endgerät umfasst, um seine Anzeige auf einem Bildschirm zu veranlassen,
wobei der spezifische Captcha mittels eines vordefinierten Verhältnisses mit einer Kennung des Sicherheitsprozessors verbunden ist, der die richtige Antwort auf den Captcha kennt, um die Identifizierung des Sicherheitsprozessors ausgehend von dem Captcha aus einer Anordnung von Sicherheitsprozessoren zu ermöglichen,
- der Sicherheitsprozessor erwirbt (116) mindestens eine Antwort auf den Captcha und vergleicht (118) die Antwort mit der richtigen Antwort, die in seinem Speicher enthalten ist, und
- der Sicherheitsprozessor begrenzt (122) das Entschlüsseln der Kryptogramme CW*, wenn keine Antwort auf den Captcha der richtigen Antwort entspricht, die in dem Speicher enthalten ist, und
- das Abfangen des übertragenen Captcha und das Identifizieren des Sicherheitsprozessors ausgehend von dem abgefangenen Captcha.

2. Verfahren nach dem Anspruch 1, bei dem:
- das Entschlüsseln der Kryptogramme CW* bei dem Implementieren (114) des Captcha aufrechterhalten wird, und
- wenn innerhalb eines vorbestimmten Zeitraums DR keine Antwort auf den Captcha erhalten wird, die der richtigen Antwort entspricht, die in dem Speicher enthalten ist, (122) der Prozessor das Entschlüsseln der Kryptogramme CW* begrenzt.

3. Verfahren nach einem der vorhergehenden Ansprüche, wobei das Verfahren das automatische Implementieren eines neuen Captcha durch den Prozessor jedes Mal aufweist, wenn der Wert eines Zählers CR, der die Anzahl der ECM- oder EMM-Nachrichten zählt, die durch den Prozessor empfangen worden sind, einen vorbestimmten Schwellenwert erreicht, oder jedes Mal, wenn eine vorgegebene Zeitdauer DP seit dem Implementieren eines vorhergehenden Captchas abgelaufen ist.

4. Verfahren nach einem der Ansprüche 2 bis 3, wobei, wenn das Zeitintervall DR seit dem Implementieren eines vorhergehenden Captchas nicht abgelaufen ist und die Anzahl der falschen Antworten auf den vorhergehenden Captcha, die durch den Prozessor empfangen worden sind, größer als ein vorbestimmter Schwellenwert MRₘₐₓ ist, das Verfahren das Implementieren eines neuen Captchas umfasst, dessen richtige Antwort, die auch in dem Speicher des Prozessors enthalten ist, sich von der richtigen Antwort des vorhergehenden Captchas unterscheidet, wobei die richtige Antwort vor dem Ablauf des Zeitintervalls DR durch den Prozessor empfangen werden muss, wobei das Zeitintervall DR während des Implementierens des neuen Captchas nicht zurückgesetzt wird.

5. Verfahren nach einem der vorhergehenden Ansprüche, wobei das Verfahren Folgendes umfasst:
- das Erfassen (102) einer potenziell anomalen Verwendung des Sicherheitsprozessors abhängig von den ECM- oder EMM-Nachrichten, die durch den Sicherheitsprozessor empfangen werden, und
- das Auslösen (112) des Implementierens des Captchas als Antwort auf das Erfassen einer potenziell anomalen Verwendung.

6. Verfahren nach Anspruch 5, wobei das Erfassen der potenziell anomalen Verwendung des Sicherheitsprozessors ausgehend von einer Zählung der Kanalwechsel während eines Beobachtungszeitraums oder einer Zählung der ECM-Nachrichten, die während eines Beobachtungszeitraums empfangen werden, durchgeführt wird.

7. Verfahren nach einem der vorhergehenden Ansprüche, wobei das Verfahren das Einbeziehen einer Marke in den spezifischen Captcha umfasst, wobei die Marke mittels des vordefinierten Verhältnisses mit der Kennung des Sicherheitsprozessors verbunden wird, und wobei die Marke eine unabdingbare Information aufweist, die, falls sie gelöscht wird, das Entdecken der richtigen Antwort auf den Captcha in einem einzigen Versuch durch einen Menschen unmöglich macht.

8. Verfahren nach einem der vorhergehenden Ansprüche, wobei das vordefinierte Verhältnis eine Datenbank, die mit jedem spezifischen Captcha die Kennung des Sicherheitsprozessors verbindet, der die richtige Antwort auf den Captcha enthält, oder eine vorgegebene Funktion ist, die es ermöglicht, den Captcha abhängig von der Kennung des Sicherheitsprozessors zu konstruieren.

9. Informationsaufzeichnungsmedium, **dadurch gekennzeichnet, dass** es Anweisungen für das Durchführen eines Verfahrens nach einem der vorhergehenden Ansprüche aufweist, wenn die Anweisungen von einem elektronischen Rechner ausgeführt werden.

10. Anordnung von mehreren elektronischen Sicherheitsprozessoren (76) für das Implementieren eines Verfahrens nach einem der Ansprüche 1 bis 8, wobei jeder Prozessor programmiert ist, um:
- ECM-Nachrichten (Entitlement Control Messages), die mindestens ein Kryptogramm CW* eines Steuerwortes CW enthalten, das es ermöglicht, einen Multimedia-Inhalt zu entschlüsseln, zu empfangen,
- das Kryptogramm CW* zu dechiffrieren und
- das entschlüsselte Steuerwort an einen Entschlüssler zu übertragen, um den verschlüsselten Multimedia-Inhalt ausgehend von dem entschlüsselten Steuerwort CW zu entschlüsseln,
**dadurch gekennzeichnet, dass**:
- jeder Prozessor einen Speicher (78) aufweist, der Folgendes enthält:
• eine Datenbank (79), die Adressen enthält, um es dem Sicherheitsprozessor (76) zu ermöglichen, spezifische Captchas (Completely Automated Public Turing test to tell Computers and Humans Apart) von einem Server eines Pay-TV-Betreibers herunterzuladen und
• entsprechende, vorab aufgezeichnete richtige Antworten auf die spezifischen Captchas, die mit den Adressen verbunden sind,
wobei jeder spezifische Captcha mittels eines vordefinierten Verhältnisses mit einer Kennung des Sicherheitsprozessors verbunden ist, der die richtige Antwort auf den Captcha kennt, um die Identifizierung des Sicherheitsprozessors ausgehend von dem Captcha aus der Anordnung von Sicherheitsprozessoren zu ermöglichen, und
- jeder Prozessor außerdem programmiert ist, um:
• eine Adresse, die in seiner Datenbank enthalten ist, zu einem empfangenden Endgerät zu übermitteln, das dafür verantwortlich ist, den Captcha, der an die Adresse heruntergeladen wird, herunterzuladen und zu implementieren und
• als Antwort auf mindestens ein Implementieren des Captchas (Completely Automated Public Turing test to tell Computers and Humans Apart) von dem empfangenden Endgerät:
- mindestens eine Antwort auf den Captcha zu erwerben und die Antwort mit der vorab aufgezeichneten richtigen Antwort, die in seinem Speicher enthalten ist, zu vergleichen und
- das Entschlüsseln der Kryptogramme CW* zu begrenzen (122), wenn keine Antwort auf den Captcha der vorab aufgezeichneten richtigen Antwort entspricht, die in seinem Speicher enthalten ist.

11. Anordnung nach Anspruch 10, wobei die Adressen URLs sind (Uniform Resource Locators).

12. Anordnung von mehreren elektronischen Sicherheitsprozessoren (76) für das Implementieren eines Verfahrens nach einem der Ansprüche 1 bis 8, wobei jeder Prozessor programmiert ist, um:
- ECM-Nachrichten (Entitlement Control Messages), die mindestens ein Kryptogramm CW* eines Steuerwortes CW enthalten, das es ermöglicht, einen Multimedia-Inhalt zu entschlüsseln, zu empfangen,
- das Kryptogramm CW* zu dechiffrieren und
- das entschlüsselte Steuerwort an einen Entschlüssler zu übertragen, um den verschlüsselten Multimedia-Inhalt ausgehend von dem entschlüsselten Steuerwort CW zu entschlüsseln,
**dadurch gekennzeichnet, dass**:
- jeder Prozessor einen Speicher (78) aufweist, der eine Datenbank (79) enthält, umfassend:
• für den Sicherheitsprozessor spezifische, vorab aufgezeichnete Captchas (Completely Automated Public Turing test to tell Computers and Humans Apart) und
• die vorab aufgezeichneten richtigen Antworten auf die Captchas, wobei jede richtige Antwort mit dem entsprechenden Captcha verbunden wird,
wobei jeder spezifische Captcha mittels eines vordefinierten Verhältnisses mit einer Kennung des Sicherheitsprozessors verbunden wird, der die richtige Antwort auf den Captcha enthält, um das Identifizieren des Sicherheitsprozessors ausgehend von dem Captcha aus der Anordnung von mehreren Sicherheitsprozessoren zu ermöglichen und
- jeder Prozessor außerdem programmiert ist, um:
• den einen der vorab aufgezeichneten Captchas zu einem empfangenden Endgerät zu übermitteln, um seine Anzeige auf einem Bildschirm zu veranlassen,
• als Antwort auf das Implementieren des Captchas (Completely Automated Public Turing test to tell Computers and Humans Apart) von dem empfangenden Endgerät:
- mindestens eine Antwort auf den Captcha zu erwerben und die Antwort mit der vorab aufgezeichneten richtigen Antwort, die in der Datenbank enthalten ist, zu vergleichen und
- das Entschlüsseln der Kryptogramme CW* zu begrenzen (122), wenn keine Antwort auf den Captcha der vorab aufgezeichneten richtigen Antwort entspricht, die in der Datenbank enthalten ist.

13. Elektronischer Sicherheitsprozessor (76) für das Implementieren eines Verfahrens nach einem der Ansprüche 1 bis 8, wobei der Prozessor programmiert ist, um:
- ECM-Nachrichten (Entitlement Control Messages), die mindestens ein Kryptogramm CW* eines Steuerwortes CW enthalten, das es ermöglicht, einen Multimedia-Inhalt zu entschlüsseln, zu empfangen,
- das Kryptogramm CW* zu dechiffrieren und
- das entschlüsselte Steuerwort an einen Entschlüssler zu übertragen, um den verschlüsselten Multimedia-Inhalt ausgehend von dem entschlüsselten Steuerwort CW zu entschlüsseln,
**dadurch gekennzeichnet, dass**:
- der Prozessor einen Speicher (78) aufweist, der mindestens eine richtige Antwort auf einen für den Sicherheitsprozessor spezifischen Captcha (Completely Automated Public Turing test to tell Computers and Humans Apart) enthält,
wobei der spezifische Captcha mittels eines vordefinierten Verhältnisses mit einer Kennung des Sicherheitsprozessors verbunden wird, der die richtige Antwort auf den Captcha enthält, um das Identifizieren des Sicherheitsprozessors ausgehend von dem Captcha aus einer Anordnung von Sicherheitsprozessoren zu ermöglichen und
- der Prozessor ebenfalls programmiert ist, um als Antwort auf mindestens ein Implementieren des Captchas (Completely Automated Public Turing test to tell Computers and Humans Apart) von einem empfangenden Endgerät:
• mindestens eine Antwort auf den Captcha zu erwerben und die Antwort mit der richtigen Antwort, die in seinem Speicher enthalten ist, zu vergleichen und
• das Entschlüsseln der Kryptogramme CW* zu begrenzen (122), wenn keine Antwort auf den Captcha der richtigen Antwort entspricht, die in dem Speicher enthalten ist,
wobei der Prozessor ebenfalls programmiert ist, um den spezifischen Captcha ausgehend von seiner Kennung zu erstellen und ihn dann zu dem empfangenden Endgerät zu übermitteln, um seine Anzeige auf einem Bildschirm zu veranlassen.

## Claims

1. Method for receiving a multimedia content scrambled using control words, this method comprising:
- reception (101 a), by a security processor, of ECM (Entitlement Control Message) messages containing at least one cryptogram CW* for a control word CW allowing a multimedia content to be descrambled,
- deciphering (110), by the security processor, of this cryptogram CW*, and
- descrambling (110) of the scrambled multimedia content on the basis of the deciphered control word CW,
**characterized in that** the method likewise has the following steps:
- at least one implementation (114) of a captcha (Completely Automated Public Turing test to tell Computers and Humans Apart) that is specific to the security processor, from a reception terminal, the correct response from which is contained in a memory of the security processor and varies from one implementation to the other, this implementation involving transmission of the captcha to this reception terminal so as to trigger display thereof on a screen,
this specific captcha being associated, by means of a predefined relationship, with an identifier of this security processor containing the correct response to this captcha so as to allow identification of this security processor on the basis of this captcha among a set of security processors,
- the security processor acquires (116) at least one response to this captcha and compares (118) this response with the correct response contained in its memory, and
- the security processor limits (122) the descrambling of the cryptograms CW* if no response to this captcha corresponds to the correct response contained in the memory, and
- interception of the transmitted captcha and identification of the security processor on the basis of the intercepted captcha.

2. Method according to Claim 1, in which:
- descrambling of the cryptograms CW* is maintained upon implementation of the captcha (114), and
- if no response to the captcha corresponding to the correct response contained in the memory is received in a predetermined time interval DR, the processor limits (122) the descrambling of the cryptograms CW*.

3. Method according to either of the preceding claims, in which the method involves the automatic implementation, by the processor, of a new captcha each time the value of a counter CR counting the number of ECM or EMM messages received by the processor reaches a predefined threshold or each time a predefined period DP has elapsed since the implementation of a previous captcha.

4. Method according to either of Claims 2 and 3, in which if the time interval DR has not expired since the implementation of a previous captcha and the number of incorrect responses to this previous captcha, as received by the processor, is greater than a predefined threshold MRₘₐₓ, the method involves the implementation of a new captcha, the correct response from which, which is likewise contained in the memory of the processor, is distinct from the correct response from the previous captcha, the correct response needing to be received by the processor before the time interval DR expires, the time interval DR not being reinitialized upon implementation of the new captcha.

5. Method according to any one of the preceding claims, in which the method involves:
- detection (102) of potentially abnormal use of the security processor according to ECM or EMM messages received by this security processor, and
- triggering (112) of the implementation of the captcha in response to this detection of potentially abnormal use.

6. Method according to Claim 5, in which the detection of the potentially abnormal use of the security processor is realized on the basis of counting of the changes of channel during an observation period or counting of the ECM messages received during an observation period.

7. Method according to any one of the preceding claims, in which the method comprises the inclusion of a mark in the specific captcha, this mark being associated, by means of the predefined relationship, with the identifier of the security processor and this mark having a piece of indispensible information that, if deleted, makes it impossible for a human being to discover the correct response to this captcha in a single attempt.

8. Method according to any one of the preceding claims, in which the predefined relationship is a database associating with each specific captcha the identifier of the security processor containing the correct response to this captcha or a predefined function allowing the captcha to be constructed according to the identifier of the security processor.

9. Information recording medium, **characterized in that** it has instructions for executing a method according to any one of the preceding claims when these instructions are executed by an electronic computer.

10. Set of a plurality of electronic security processors (76) for implementing a method according to any one of Claims 1 to 8, each processor being programmed to:
- receive ECM (Entitlement Control Message) messages containing at least one cryptogram CW* for a control word CW allowing a multimedia content to be descrambled,
- decipher this cryptogram CW*, and
- transmit the deciphered control word to a descrambler in order to descramble the scrambled multimedia content on the basis of this deciphered control word CW, **characterized in that**
- each processor has a memory (78) containing:
• a database (79) containing addresses to allow this security processor (76) to download specific captchas (Completely Automated Public Turing test to tell Computers and Humans Apart) from a server of a pay television operator, and
• respective prerecorded correct responses to the specific captchas associated with these addresses,
each specific captcha being associated, by means of a predefined relationship, with an identifier for this security processor containing the correct response to this captcha so as to allow the identification of this security processor on the basis of this captcha among said set of a plurality of security processors, and
- each processor is likewise programmed to:
• transmit an address contained in its database to a reception terminal, which takes care of downloading and implementing the downloaded captcha at this address, and
• in response to at least one implementation of this captcha (Completely Automated Public Turing test to tell Computers and Humans Apart), from the reception terminal:
- acquire at least one response to this captcha and compare this response with the prerecorded correct response contained in its memory, and
- limit (122) the descrambling of the cryptograms CW* if no response to this captcha corresponds to the prerecorded correct response contained in its memory.

11. Set according to Claim 10, in which the addresses are URLs (Uniform Resource Locator).

12. Set of a plurality of electronic security processors (76) for implementing a method according to any one of Claims 1 to 8, each processor being programmed to:
- receive ECM (Entitlement Control Message) messages containing at least one cryptogram CW* for a control word CW allowing a multimedia content to be descrambled,
- decipher this cryptogram CW*, and
- transmit the deciphered control word to a descrambler in order to descramble the scrambled multimedia content on the basis of this deciphered control word CW, **characterized in that**
- each processor has a memory (78) containing a database (79) comprising:
• prerecorded captchas (Completely Automated Public Turing test to tell Computers and Humans Apart) that are specific to the security processor, and
• the prerecorded correct responses to the captchas, each correct response being associated with the corresponding captcha,
each specific captcha being associated, by means of a predefined relationship, with an identifier for this security processor containing the correct response to this captcha so as to allow the identification of this security processor on the basis of this captcha among said set of a plurality of security processors, and
- each processor is likewise programmed to:
• transmit one of the prerecorded captchas to a reception terminal so as to trigger display thereof on a screen,
• in response to the implementation of this captcha (Completely Automated Public Turing test to tell Computers and Humans Apart), from this reception terminal:
- acquire at least one response to this captcha and compare this response with the prerecorded correct response contained in the database, and
- limit (122) the descrambling of the cryptograms CW* if no response to this captcha corresponds to the prerecorded correct response contained in the database.

13. Electronic security processor (76) for implementing a method according to any one of Claims 1 to 8, this processor being programmed to:
- receive ECM (Entitlement Control Message) messages containing at least one cryptogram CW* for a control word CW allowing a multimedia content to be descrambled,
- decipher this cryptogram CW*, and
- transmit the deciphered control word to a descrambler in order to descramble the scrambled multimedia content on the basis of this deciphered control word CW, **characterized in that**
- the processor has a memory (78) containing at least one correct response to a captcha (Completely Automated Public Turing test to tell Computers and Humans Apart) that is specific to the security processor,
the specific captcha being associated, by means of a predefined relationship, with an identifier for this security processor containing the correct response to this captcha so as to allow the identification of this security processor on the basis of this captcha among a set of security processors, and
- this processor is likewise programmed to, in response to at least one implementation of this captcha (Completely Automated Public Turing test to tell Computers and Humans Apart), from a reception terminal:
• acquire at least one response to this captcha and compare this response with the correct response contained in its memory, and
• limit (122) the descrambling of the cryptograms CW* if no response to this captcha corresponds to the correct response contained in the memory,
in which the processor is likewise programmed to construct this specific captcha on the basis of its identifier and then to transmit it to the reception terminal so as to trigger display thereof on a screen.
